# EUROPEAN PATENT SPECIFICATION

(11) **EP 4 283 840 B1**
(45) Date of publication and mention of the grant of the patent: **26.08.2026**
(21) Application number: 23173641.4
(22) Date of filing: 16.05.2023
(51) Int. Cl.: H02K 3/47, H02K 5/24, H02K 7/09, H02K 11/20, H02K 21/12, H02K 7/14, H02K 21/14, H02K 21/22

(54) **ACTUATOR SYSTEM**
AKTUATORSYSTEM
SYSTÈME D'ACTIONNEUR

(30) Priority: 24.05.2022 NL 2031970
(43) Date of publication of application: 29.11.2023
(73) Proprietor: MI-Partners BV, 5507 TB Veldhoven (NL)
(72) Inventor: WULLMS, Pieter Hubertus Godefrida, 5507 TB VELDHOVEN (NL); RUIJL, Theo Anjes Maria, 5507 TB VELDHOVEN (NL); KOORNEEF, Lucas Franciscus, 5507 TB VELDHOVEN (NL); LARO, Dick Antonius Hendrikus, 5507 TB VELDHOVEN (NL); WIJNHOVEN, Maryn Leonardus Johannes, 5507 TB VELDHOVEN (NL); PRINCEN, Martinus Cornelis Franciscus, 5507 TB VELDHOVEN (NL)
(74) Representative: EP&C

(56) References cited:
- US-A- 3 845 995
- US-A- 5 952 744
- US-B2- 9 140 297

## Description

In some technical fields, such as in x-ray tomography, it is desirable to position an object with sub-micrometer precision, such as with nanometer precision or better. To move the object to the desired position, an actuator system is provided. For example, US 5,952,744 discloses one such actuator system.

Known high precision actuator systems comprise Lorenz actuators to generate forces to move the object in six degrees of freedom. A Lorentz actuator has a coil and a permanent magnet that cooperate together to generate an electromagnetic force. Because the Lorenz actuator does not need to have a physical connection between the coil and the permanent magnet, the Lorentz actuator helps to isolate the object from disturbances from the surroundings, which improves the position accuracy.

Although the known actuator systems are able to move the object in six degrees of freedom, there is typically a large difference between the ranges of movement in the six degrees of freedom. A known actuator system is typically designed to perform one or two main movements over a large range, whereas the movements in the other degrees of freedom are over a substantial smaller range. Based on the main movement, two types of actuator systems can be distinguished. The first type is a linear actuator system. The linear actuator system is capable to move the object mainly in one or two linear directions, whereas the linear actuator system is capable to rotate the object only a very limited amount. For example, the linear actuator system is able to translate the object along an axis for several centimeters or more, whereas the linear actuator system is able to rotate the object only a few milli-radians or less.

The second type of actuator system is a rotational actuator system. The rotational actuator system is adapted to mainly rotate the object about a rotational axis. The rotational actuator system is able to rotate the object about the rotational axis over a large range, for example 90° or 180° or 360° or more. The rotational actuator system is able to translate the object over a small range, for example several millimeters or less. Depending on the desired main movement of the object, the skilled person chooses either a linear actuator system or a rotational actuation system.

The known actuator system disclosed in WO2011/096888 is used for rotating an object about an axis over a large range and to translate the object along the axis over a small range. The known actuator system has two arrays of magnets and two arrays of coils. The two arrays of magnets are arranged tangentially on a magnet support. Each array of magnets is arranged differently. One array of magnets is arranged to cooperate with one of the arrays of coils to generate a force to rotate the magnet support relative to the coils about the axis. The other array of magnets is arranged to cooperate with the other array of coils to generate a force to translate the magnet support relative to the coils along the axis.

A disadvantage of the known actuator system of WO2011/096888 is that two arrays of magnets and two arrays of coils are needed to perform the rotation about the axis and the translation along the axis. This results in a large actuator system, because the actuator system needs to accommodate all these magnets and coils. Because of the large size, and the resulting large mass, it is more challenging to achieve a desired high accuracy with the actuator system. For example, due to the large mass, the coils generate more heat when generating a force to accelerate the magnet support compared to a smaller magnet support with less mass. An increase in temperature of the actuator system has a negative effect on the accuracy of the actuator system.

Further, in case the axis has a vertical component, gravity tries to pull the magnet support of the known actuator system of WO2011/096888 downward. Because there is no physical contact between the coils and the magnet to prevent the magnet support from moving downward, one array of coils would need to be powered continuously to compensate for the weight of the magnet support and magnets. This compensation is needed even when the magnet support is maintained at a fixed position. This situation is undesirable, because this would cause the coils to generate a large amount of heat. Therefore, it is well known to use a gravity compensator.

A gravity compensator, also known as a magnetic gravity compensator, comprises a plurality of magnets. One magnet is coupled to the moveable body, such as the magnet support. Another magnet is coupled to a stationary body. There is an air gap between the magnet on the moveable body and the magnet on the stationary body. The air gap allows the moveable body and the stationary body to move relative to each other, without the magnets contacting each other. The magnet on the moveable body faces the magnet on the stationary body to generate a repulsive force. The repulsive force is at least partly in the vertical direction to compensate for the weight of the moveable body.

An important property of the gravity compensator is that the repulsive force remains substantially constant independently of the position of the moveable body relative to the stationary body. In case the repulsive force would change depending on the position of the moveable body relative to the stationary body, the gravity compensator would cause a parasitic stiffness between the moveable body and the stationary body. Such a parasitic stiffness reduces the accuracy of the actuator system, because it acts as a disturbance.

A disadvantage of the known gravity compensator is that, although the known gravity compensator allows a rotation of the moveable body about the axis with an acceptable parasitic stiffness, the known gravity compensator is not able to allow a movement of the moveable body in a direction perpendicular to the axis with an acceptable parasitic stiffness.

### Actuator system

In a first aspect, it is an objective of the invention to provide an improved actuator system, or to at least provide an alternative actuator system. Optionally, it is an objective to provide an actuator system that makes more efficient use of the magnets and coils to generate forces to move the object.

The objective of the invention is achieved by an actuator system for moving an object. The actuator system comprises a rotor for supporting the object, and a stator. The rotor comprises a circular magnetic track for generating a magnetic field across a radial air gap. The circular magnetic track is coaxial to an axis extending in an axial direction. The stator comprises a first set of coils and a second set of coils. The first set of coils and the second set of coils are arranged at least partly in the radial air gap. The first set of coils extends axially on both sides beyond the circular magnetic track to generate a tangential electromagnetic force in a direction tangentially to the circular magnetic track to rotate the rotor relative to the stator about the axis. The second set of coils extends axially on only one side beyond the circular magnetic track to generate an axial electromagnetic force in the axial direction to move the rotor relative to the stator in the axial direction.

Each coil comprises at least one wire for conducting an electric current. Based on the direction of the magnetic field and the direction of the wire, the interaction between the electric current and the magnetic field causes an electromagnetic force. The wire is arranged in loops that are tightly packed together to increase the amount of electromagnetic force per unit of electric current.

The coil has a middle section and two end sections. In the middle section, the wire extends at least partly in the axial direction. As a result, an electric current flowing through the middle section, causes an electromagnetic force in the tangential direction. In the end sections, the wire extends at least partly in the tangential direction. As a result, an electric current flowing through the end sections causes an electromagnetic force in the axial direction due to an interaction with the radial magnetic field of the circular magnetic track.

The coils of the first set of coils extend axially on both sides beyond the circular magnetic track, causing the end sections to be at least partly outside the circular magnetic track. As a result, the first set of coils efficiently create a tangential electromagnetic force while creating only small forces or no forces in other directions. Those forces in other directions may negatively affect the accuracy of the actuator system if those forces are large. The coils of the second set of coils extend axially on only one side beyond the circular magnetic track. As a result, one end section is in magnetic field in the radial air gap, whereas the other end section is outside the magnetic field of the radial air gap. This way, the end section in the magnetic field in the radial air gap is able to efficiently generate an axial magnetic force. Because the other end section is out of the magnetic field, it is prevented that the other end section generates an axial magnetic force with the same amplitude but with an opposite direction. By controlling the electric current to the first set of coils and the electric current to the second set of coils, the tangential electromagnetic force and the axial electromagnetic force are controlled independently from each other while making efficient use of the circular magnetic track.

The object is an object that is movable by the actuator system. For example, the object is a sample or a specimen or tissue that is to be examined. For example, the object is suitable for subjection to radiation, such as optical radiation or high energy radiation such as x-ray radiation. The actuator system is, for example, able to move the object relative to a radiation source to expose multiple portions of the object to the radiation. For example, the object is a workpiece that is to be processed. For example, a laser source is provided to direct a laser beam onto the workpiece to process the workpiece. For example, the object is an optical component, such as a mirror, or a lens, or an array of mirrors, or an array of lenses.

The rotor is adapted to support the object. For example, the rotor comprises a table to support to object. For example, the rotor comprises a clamping device to clamp the object on the table. The clamping device comprises, for example, a vacuum clamp, or a mechanical clamp or an electrostatic clamp. The rotor is, for example, rotational symmetrical along the axis or non-rotational symmetrical along the axis. The length of the rotor along the axis is, for example, larger than a radius or a width of the rotor in a direction perpendicular to the axis. The length of the rotor along the axis is, for example, smaller than a radius or a width of the rotor in a direction perpendicular to the axis.

The rotor comprises the circular magnetic track. The circular magnetic track comprises a plurality of magnets that are arranged along a circle that is coaxial to the axis. The plurality of magnets are arranged with alternating polarization. For example, the magnets are arranged in a circular Halbach-arrangement. The circular magnetic track generates the magnetic field across the radial air gap.

The stator comprises the first set of coils and the second set of coils. For example, the stator comprises a frame to which the first set of coils and the second set of coils are mounted. For example, the stator comprises a recess or through hole for accommodating a part of the rotor or all of the rotor. The stator supports the rotor in the tangential direction via the tangential electromagnetic force created by the first set of coils. The stator may support the rotor by means of a vertical and/or horizontal supporting device. As an example, the stator can comprise one or more bearings, such as an air bearing to constrain the rotor relative to the stator in one or more horizontal directions. As another example, the stator can comprise a vertical supporting device to support the rotor in the axial direction in addition to the axial electromagnetic force created by the second set of coils. For example, the vertical supporting device comprises a spring, such as a weak spring, to bear part of the weight of the rotor. For example, the vertical supporting device comprises a magnetic gravity compensator that provides a magnetic force to bear part of the weight of the rotor. For example, the rotor is supported by the vertical supporting device via a bearing that allows the rotor to rotate relative to the vertical supporting device.

The first set of coils comprises at least two electrical coils, preferably three electrical coils or more. By having at least two coils, a dead point in the rotation of the rotor about the axis is prevented. The coil is, for example, a square coil or a rectangular coil. The coil is formed, for example, by an electric wire that is winded with a wild winding, a helical winding or an orthocyclic winding. The coils as applied can also have a band or foil shaped conductor. Also solid or bar conductors can be applied to manufacture the coils. The electric conducting material to manufacture the wire, band, foil or bar shaped conductor can e.g. be or comprise copper or aluminum. The windings are extending at least partly in the axial direction. An electric current flowing in the axial direction through the windings generates the tangential electromagnetic force in cooperation with the magnetic field across the radial air gap. For example, the coil has a length in the axial direction, a width in the tangential direction and a thickness in the radial direction. For example, the length is larger than the width and the thickness. The thickness is smaller than the length and the width. The length is, for example, large enough to place the end sections of the coils sufficiently far away from the circular magnetic track in the axial direction, to prevent the end sections of the coils to cause a disturbing electromagnetic force in cooperation with the magnetic field across the radial air gap. On the other hand, the length is small enough to limit the electrical resistance of the wire, and to limit the size of the actuator system. The coil is, for example, straight along the width or is curved along the width. The curve along the width has, for example, a radius corresponding to the radius of the circular magnetic track. For example, the radius of the curve of the width is slightly larger or slightly smaller than the radius of the circular magnetic track. The width corresponds, for example, with a magnetic pitch of the circular magnetic track. The thickness of the coil is sufficiently large to provide sufficient structural strength to the coil, and to provide a sufficient amounts of loops in the magnetic field across the radial air gap.

The first set of coils extends axially on both sides beyond the circular magnetic track. In case the axial direction is vertical, the coils of the first set extend partly above the circular magnetic track and extend partly below the circular magnetic track. The top end section of the coil and the bottom end section of the coil do not face the circular magnetic track in the radial direction, whereas the middle section of the coil faces the circular magnetic track in the radial direction.

The second set of coils comprises at least two electrical coils, preferably three electrical coils or more. The coil is, for example, is a square coil or a rectangular coil. The coil is formed, for example, by an electric wire that is winded with a wild winding, a helical winding or an orthocyclic winding. The electric wire comprises, for example, copper. The windings are extending at least partly in the tangential direction. An electric current flowing in the tangential direction through the windings generates the axial electromagnetic force in cooperation with the magnetic field across the radial air gap. The coil has a length in the axial direction, a width in the tangential direction and a thickness in the radial direction. For example, the length is larger than the width and the thickness. The thickness is smaller than the length and the width. The length is, for example, large enough to place one of the end sections of the coils sufficiently far away from the circular magnetic track in the axial direction, to prevent that end section to cause a disturbing electromagnetic force in cooperation with the magnetic field across the radial air gap. For example, the disturbing electromagnetic force is an axial force in an opposite direction of the axial electromagnetic force that is to be generated by the second set of coils. On the other hand, the length is small enough to limit the electrical resistance of the wire, and to limit the size of the actuator system. The coil is, for example, straight along the width or is curved along the width. The curve along the width has, for example, a radius corresponding to the radius of the circular magnetic track. For example, the radius of the curve of the width is slightly larger or slightly smaller than the radius of the circular magnetic track. The width corresponds, for example, with a magnetic pitch of the circular magnetic track. The thickness of the coil is sufficiently large to provide sufficient structural strength to the coil, and to provide a sufficient amounts of loops in the magnetic field across the radial air gap.

For example, the first set of coils and the second set of coils comprise the same type of coils. The first set of coils is arranged at a different axial position relative to the circular magnetic track than the second set of coils. By arranging the first set of coils and the second set of coils are different axial positions, the first set of coils extends axially on both sides beyond the circular magnetic track, whereas the second set of coils extends axially on only one side beyond the circular magnetic track. In another example, the coils of the first set and the coils of the second set are different from each other. For example, the coils of the first set have a different length or width and/or thickness than the coils of the second set. For example, the coils of the first set have a different wire and/or a different number of windings than the coils of the second set.

The second set of coils extends axially on only one side beyond the circular magnetic track. In case the axial direction is vertical, the coils of the second set of coils extend partly either above the circular magnetic track or below the circular magnetic track. Either the top end section or the bottom end section of the coil faces the circular magnetic track in the radial direction, whereas the other of the top end section or the bottom end section of the coil does not face the circular magnetic track in the radial direction. In an example, the middle section of the coil faces the circular magnetic track in the radial direction. In another example, the middle section of the coil does not face the circular magnetic track in the radial direction. In yet another example, only a part of the middle section of the coil faces the circular magnetic track in the radial direction. The embodiments and examples described in detail below belong to the present invention.

According to the invention, each of the coils has two end sections and a middle section arranged between the two end sections in the axial direction. The middle section comprises a wire mainly extending in the axial direction. The end section comprises the wire extending tangentially to the circular magnetic array. Each coil of the first set of coils is arranged with the middle section in the radial air gap. Each coil of the first set of coils is arranged with the end sections outside the radial air gap. Each coil of the second set is arranged with one end section in the radial air gap and with one end section outside the radial air gap.

According to the invention, the middle sections of the first set of coils is arranged in the radial air gap, whereas the end sections of the first set of coils are arranged outside the radial air gap. This allows the first set of coils to generate the tangential electromagnetic force without generating any substantial forces in the axial direction. Preferably, the middle section comprises only wire extending in the axial direction, but not extending in any other direction. One end section of the second set of coils is arranged in the radial air gap. Because the wire of that end section is mainly extending tangentially to the circular magnetic array, the end section is able to generate the axial electromagnetic force efficiently. By having the other end section outside the radial air gap, it is prevented that the other end section generates an axial force in an opposite direction to the axial electromagnetic force and with a substantial same magnitude.

The wire in the end section extends tangentially, for example, in case the wire forms a circular path over of 180° with a diameter equal to the width of the coil. The circular path is through a plane defined by the axial direction and the tangential direction. In another example, the end section has a portion in which the wire extends only in the tangential direction.

In an embodiment, the coils of the first set of coils have a longer length in the axial direction than the coils of the second set of coils.

According to this embodiment, the coils of the first sets are longer than the coils of the second set, because the coils of the first set of coils extend axially on both sides beyond the circular magnetic track. The coils of the second set, however, extend axially on only one side beyond the circular magnetic track, and therefore may be shorter than the coils of the first set. By making the second set of coils shorter, the electrical resistance of the second set of coils is reduced. As a result, the actuator system becomes more efficient. For example, the coils of both the first set and the second set are mounted at the same axial position to a frame of the stator. This allows for more easy assembly of the actuator system. From that axial position, the first set of coils extend axially via the radial air gap beyond the circular magnetic track on the opposite side, whereas the second set of coils extends into the radial air gap.

In an embodiment, the first set of coils comprises three first coil groups. Each of the first coil groups has three coils. The coils of the three first coil groups are arranged at different angular distances relative to the axis. The three first coil groups are arranged to generate three tangential electromagnetic forces to move the rotor relative to the stator in a plane perpendicular to the axis in two directions perpendicular to each other, and to rotate the rotor about the axis.

According to this embodiment, the first set has three first coil groups of each three coils. The coils are arranged at different angular distances relative to the axis. For example, the radial distance relative to the axis is the same for all coils in the first set. For example, the coils are arranged rotational symmetrically around the axis. For example, the coils of a first coil group are adjacent to each other. For example, the first coil groups are arranged at angles of 120° relative to each other. Because the three coil groups are arranged at different angular distances relative to the axis, each of the three coil groups is able to generate a tangential electromagnetic force in a different direction. The coils of the first coil groups are arranged to cooperate together with the circular magnetic track to generate multiple electromagnetic forces. The multiple electromagnetic forces are in the plane perpendicular to the axis. By controlling the magnitudes of the electromagnetic force created by each of the first coil groups, the rotor is moveable in the plane perpendicular to the axis in three degrees of freedom. These three degrees of freedom are a rotation about the axis, and two translations in the plane. The two translations are perpendicular to each other. The rotation about the axis is, for example, over a large range, for example 90° or 180° or 360° or more. Each of the two translations is, for example, over a small range, for example less than 2-3 mm, or less than 1 mm or less than 0.5 mm or less than 0.1 mm.

Each of the first coil groups has three coils to allow 3 phase commutation of the three coils in each of the first coil groups. This allows improved control of the electromagnetic forces while rotating the rotor about the axis.

In an embodiment, the circular magnetic track has an outer magnetic array and an inner magnetic array arranged radially inward of the outer magnetic array. The radial air gap extends radially between the outer magnetic array and the inner magnetic array. The first set of coils is arranged to generate the at least three tangential electromagnetic forces to radially move the first set of coils through the radial air gap.

According to this embodiment, the circular magnetic track has two magnetic arrays, i.e., the inner magnetic array and the outer magnetic array. The radial air gap is between the inner magnetic array and the outer magnetic array. By having two magnetic arrays, the magnetic field across the radial air gap is increased compared to having only a single magnetic array. The increased magnetic field causes an increased electromagnetic force for the same electric current through the coils. Preferably, the radial air gap between the two magnetic arrays is as small as possible. The smaller the radial air gap, the higher the magnetic field, thus the more efficient the actuator system is. In case the desired translation of the rotor in the plane perpendicular to the axis is small, such as less than 1 mm, even a small radial air gap provides sufficient space for translation of the rotor. The radial air gap is sufficiently large to accommodate the thickness of the coils of the first set, and the translation of the coils of the first set in the plane perpendicular to the axis without the coils of the first set colliding with the circular magnetic track.

In an embodiment, the second set of coils comprises three second coil groups. Each of the second coil groups has three coils. The coils of the second coil groups arranged at different angular distances relative to the axis. The three second coil groups are arranged to generate three axial electromagnetic forces to move the rotor relative to the stator in the axial direction, and to tilt the rotor about two rotational axes perpendicular to each other and extending in the plane perpendicular to the axis.

According to this embodiment, the coils of the second set are arranged at different angular distances relative to the axis. For example, the radial distance relative to the axis is the same for all coils in the second set. For example, the coils are arranged rotational symmetrically around the axis. For example, the coils of a second coil group are adjacent to each other. For example, the three second coil groups are arranged at angles of 120° relative to each other. Because coils at different angular distances relative to the axis, each of the three second coil groups is able to generate an axial electromagnetic force with a different position relative to the axis. The coils of the second set are arranged to cooperate together with the circular magnetic track to generate multiple electromagnetic forces. The multiple electromagnetic forces are in the axial direction. By controlling the magnitudes of the electromagnetic force created by each of the second coil groups, the rotor is moveable in three degrees of freedom. These three degrees of freedom are a translation in the axial direction, and two rotations. Each rotation is about a rotational axis. The two rotational axes are in the plane perpendicular to the axis and are perpendicular to each other. The translation in the axial direction is, for example, over a large range. The large range is, for example, more than 1 mm or more than 10 mm. The rotation about each of the rotational axes is, for example, over a small range. The small range is, for example, less than ± 5°, or less than ± 1°, or less than ± 0.5°.

In an embodiment, the actuator system comprises a control unit configured to control the first set of coils and the second set of coils to move the rotor relative to the stator in six degrees of freedom.

According to this embodiment, the control unit is configured to move the rotor in six degrees of freedom by controlling the first set of coils and the second set of coils. For example, by controlling the electric currents through the first set of coils, the control unit controls the movement of the rotor in the plane perpendicular to the axis. The control unit controls the rotation of the rotor about the axis, and the two translations in the plane perpendicular to the axis. The two translations are perpendicular to each other. For example, by controlling the electric currents through the second set of coils, the control unit controls the movement of the rotor in the axial direction. The control unit controls the translation of the rotor in the axis direction and the rotations about the two rotational axes. The two rotational axes are in the plane perpendicular to the axis and are perpendicular to each other. The control unit is able to control the rotor relative to the stator in six degrees of freedom by controlling three degrees of freedom with the first set of coils and by controlling the three remaining degrees of freedom with the second set of coils. This way, the position and/or movement of the object can be controlled with a high accuracy. For example, the control unit is directly connected to the first set of coils and to the second set of coils. For example, the control unit comprises an amplifier or is connectable to an amplifier. The amplifier is, for example, a three phase amplifier. The control unit provides a control signal to the amplifier. Based on the control signal, the amplifier provides one or more currents with a desired amperage to the first set of coils and the second set of coils. The control unit comprises, for example, a microprocessor, a Field Programmable Gate Array (FPGA), and/or a Programmable Logic Device (PLD). The control unit comprises, for example, a storage device for storing software. The software comprises instructions which, when executed by the control unit, causes the control unit to control the first set of coils and the second set of coils to perform a desired movement of the rotor.

In an embodiment, the actuator system is adapted to supply the three first coil groups and/or the three second coil groups using three phase commutation.

According to this embodiment, by providing the three phase commutation, the coils are able to generate the electromagnetic forces accurately.

In an embodiment, wherein the coils of the first set and the coils of the second set are arranged in an alternating pattern.

According to this embodiment, the coils of the first set and the coils of the second set are arranged between each other. For example, every coil of the first set is in between two coils of the second set in the tangential direction. For example, every coil of the second set is in between two coils of the first set in the tangential direction. For example, a first coil group is in between two second coil groups in the tangential direction. For example, a second coil group is in between two first coil groups in the tangential direction. For example, all coils of the first set and of the second set are arranged along a single circular line that is coaxial with the axis. By arranging the coils of the first set and the coils of the second set in the alternating pattern, the locations at which the tangential electromagnetic forces and the axial electromagnetic forces are applied are optimal divided over the stator. As a result, the movement of the rotor can be controlled with improved accuracy by controlling the tangential electromagnetic forces and the axial electromagnetic forces.

In an embodiment, the actuator system comprises a reaction mass and a base frame. The stator is mounted to the reaction mass. The reaction mass is moveably connected to the base frame.

When the rotor is moved by the tangential electromagnetic force and/or the axial electromagnetic force, a reaction force is applied to the stator. The first set of coils applies a tangential reaction force to the stator. The second set of coils applies an axial reaction force to the stator. To reduce the amount of the tangential reaction force and/or the axial reaction force that the stator transfers to other components near the stator, a reaction mass is provided. The reaction mass is based on Newton's third law: the law of action and reaction. Because the stator is mounted to the reaction mass, the stator transfers the tangential reaction force and the axial reaction force to the reaction mass. However, because the reaction mass is moveable relative to the base frame, the tangential reaction force and/or the axial reaction force cause the reaction mass to accelerate or to decelerate. Because of the acceleration or deceleration, only a small amount or almost none of the tangential reaction force and/or the axial reaction force is transferred from the reaction mass to other components near the stator. As a result, the actuator system causes less disturbances.

For example, the reaction mass is supported to the base frame via a spring with a low stiffness. The spring brings back the reaction mass to a nominal position in case no reaction force is applied to the stator. The spring allows the reaction mass to move relative to the base frame. Because the spring has a low stiffness, the movement of the reaction mass causes only a small force to be applied to the base frame. For example, the reaction mass is adapted to rotate about the axis relative to base frame, and/or to translate relative to the base frame in the axial direction. For example, the reaction mass is adapted to translate in the plane perpendicular to the axis. For example, the reaction mass is adapted to rotate about one or both of the rotational axes. For example, the mass of the reaction mass is as high as the mass of the stator or higher than the mass of the stator. The higher the mass of the reaction mass, the less the reaction mass accelerates due to a reaction force, according to Newton's first law. For example, the reaction mass comprises a material with a high density, such as lead or steel.

In an embodiment, the actuator system comprises a sensor frame and a sensor. The sensor frame is moveably connected to the base frame. The sensor frame supports the sensor. The sensor is arranged to provide a signal representative of a position of the rotor.

According to this embodiment, the sensor frame is moveable relative to the base frame. The base frame may suffer from vibrations. Even in case the reaction mass is present, the stator may cause vibrations in the base frame. Further, an external source may cause the base frame to vibrate. Such an external source may be a machine near the actuator system, a person walking near the actuator system etc. By making the sensor frame movable connected to the base frame, the sensor frame is at least partly isolated from the vibrations of the base frame. For example, the sensor frame is connected to the base frame via a spring with a low stiffness. The low stiffness of the spring allows the sensor frame to move relative to the base frame. A vibration of the base frame would compress and/or extend the spring. However, because of the low stiffness, a vibration of the base frame would only cause a small disturbance force on the sensor frame. Because the sensor frame is isolated from the vibrations of the base frame, the sensor mounted in the sensor frame is able to accurately determine a position of the rotor. The sensor comprises for example, a capacitive sensor or an inductive sensor to determine a distance between a surface of the rotor and the sensor. The sensor is, for example, an optical sensor to determine a distance between a surface of the rotor and the sensor. The optical sensor comprises, for example, an interferometer, or an encoder head. The interferometer is, for example, arranged to cooperate with a reflective surface on a surface of the rotor. The encoder head is, for example, arranged to cooperate with an encoder scale on a surface the rotor. The surface of the rotor is, for example, a lateral surface of the rotor and/or an axial surface of the rotor. The rotor is, for example, provided with a groove and/or a protrusion that forms the surface of the rotor that is used by the sensor.

In an embodiment, each of the stator and the rotor are provided with a through hole extending along the axis.

According to this embodiment, the through hole is provided along the stator and the rotor. The through hole is for example used to accommodate part of a heat control system adapted to control a heat of the object. By having the through hole, the heat control system is, for example, able to provide heat exchange fluid via the through hole close to the object. For example, the through hole is used to accommodate wires for electric power or data signals. By arranging the wires in the through hole, the wires do not interfere with components outside the rotor.

In an embodiment, the actuator system comprises a gravity compensator for supporting a weight of the rotor. The gravity compensator comprises a rotor magnet, an inner magnet and an outer magnet. The rotor magnet is arranged coaxially on the rotor.
The inner magnet is arranged on the stator. The outer magnet ring is arranged on the stator concentrically and radially outward to the inner magnet. The rotor magnet is arranged to face the inner magnet and the outer magnet ring in the axial direction to generate a repulsive force in the axial direction.

According to this embodiment, the axial direction is at least partly in the vertical direction. Because the rotor is moveable in the axial direction, gravity tries to move the rotor in the axial direction. This movement can be prevented by providing a compensation force by actuating the second set of coils to generate the axial electromagnetic force. However, the compensation force is also needed when no movement of the rotor is required. To prevent continuous use of the second set of coils, and the resulting heat generation of the second set of coils, the gravity compensator is provided. The gravity compensator generates a repulsive force in the axial direction between the rotor magnet on the rotor, and the inner magnet and the outer magnet ring on the stator. Due to this repulsive force between the rotor and the stator, the compensation force is provided by the gravity compensator. As the gravity compensator does not use active components, such as a coil, excessive heat generation is prevented.

The repulsive force is, for example, large enough to completely compensate for the weight of the rotor. The repulsive force is, for example, large enough to compensate for a large portion of the weight of the rotor. The weight of the rotor includes, for example, the weight of the object on the rotor, as well as any other components that are carried by the rotor. Note that the weight of the rotor may be less than the mass of the rotor. For example, the weight of the rotor is less in case the axial direction is not exactly vertical. The more the axial direction deviates from the vertical direction, the less the weight of the rotor becomes.

Because the rotor magnet faces the inner magnet and the outer magnet ring, the rotor magnet is able to move in the plane perpendicular to the axis relative to the inner magnet with only a minimum amount of change of the repulsive force. Without the outer magnet ring, a movement of the rotor relative to the stator in the plane perpendicular to the axis would significantly change the repulsive force. The significant change of the repulsive force would disturb accurate movement of the rotor. Because the gravity compensator comprises the inner magnet and the outer magnet ring, the repulsive force remains substantially the same independently of the position of the rotor in the plane perpendicular to the axis. This way, the weight of the rotor is supported without introducing disturbances during movement of the rotor.

In an embodiment, the inner magnet and the outer magnet ring are arranged with a radial opening between the inner magnet and the outer magnet ring.

According to this embodiment, the radial opening helps to maintain a substantially constant repulsive force while moving the rotor along the plane perpendicular to the axis.

In an embodiment, the rotor magnet extends radially across the radial opening.

According to this embodiment, the rotor magnet is large enough to extend radially across the radial opening. For example, during any movement of the rotor in the plane perpendicular to the axis, the rotor magnet extends radially across the radial opening.

In an embodiment, the inner magnet extends radially inward of the rotor magnet. The outer magnet ring extends radially outward of the rotor magnet.

According to this embodiment, during any position in the range of movement, the rotor magnet extends radially across the radial opening. So in any position in the range of movement, the rotor magnet faces both the inner magnet and the outer magnet ring. As a result, the repulsive force is more constant in the range of movement.

For example, the rotor magnet has an inner radius, i.e., the radius that defines a hole in the rotor magnet. The inner magnet has an inner radius that is smaller than the inner radius of the rotor magnet. The inner magnet has an outer radius that is larger than the inner radius of the rotor magnet. The rotor magnet has an outer radius, i.e., the radius that defines an outer edge of the rotor magnet. The outer magnet ring has an inner radius that is smaller than the outer radius of the rotor magnet. The outer magnet ring has an outer radius that is larger than the outer radius of the rotor magnet.

For example, the rotor is adapted to move in the plane perpendicular to the axis, while preventing any part of the rotor magnet from moving radially inward of the inner radius of the inner magnet. For example, the rotor is adapted to move in the plane perpendicular to the axis, while preventing any part of the rotor magnet from moving radially outward of the outer radius of the outer magnet ring.

In an embodiment, the rotor magnet, the inner magnet and the outer magnet ring are axially magnetized.

According to this embodiment, the axial magnetization of the rotor magnet, the inner magnet and the outer magnet ring helps to generate the repulsive force. The north pole and the south pole of the rotor magnet are arranged on opposite sides of the rotor magnet along the axial direction. The north pole and the south pole of the inner magnet are arranged on opposite sides of the inner magnet along the axial direction. The north pole and the south pole of the outer magnet ring are arranged on opposite sides of the outer magnet ring along the axial direction. For example, the north pole of the rotor magnet faces the north pole of the inner magnet and the north pole of the outer magnet ring. In another example, the south pole of the rotor magnet faces the south pole of the inner magnet and the south pole of the outer magnet ring. For example, the orientation of the magnetization of the inner magnet and the outer magnet ring is the same, i.e., the south poles of both the inner magnet and the outer magnet ring face the rotor magnet, or the north poles of both the inner magnet and the outer magnet ring face the rotor magnet.

In an embodiment, the inner magnet and the rotor magnet form a through hole along the axis.

In an embodiment, the actuator system comprises a stator magnet ring arranged on the stator coaxially to the inner magnet. The inner magnet is arranged axially between the rotor magnet and the stator magnet ring. The stator magnet ring is arranged at an axial offset from the inner magnet.

According to this embodiment, the stator magnet ring is placed on the stator on a side of the inner magnet opposite to the rotor. There is a distance between the stator magnet ring and the inner magnet in the axial direction. By placing the stator magnet ring at the offset from the inner magnet, the magnitude of the repulsion force is altered. By placing the stator magnet ring, the repulsion force is altered to better match with the weight of the rotor.

In an embodiment, the inner magnet and the stator magnet ring have at least one of a same diameter and a same thickness.

In an embodiment, the stator magnet ring is axially magnetized.

In an embodiment, the inner magnet, the rotor magnet and the stator magnet ring form a through hole along the axis.

In an embodiment, there is provided a tomographic apparatus for generating an image of an internal structure of the object. The tomographic apparatus comprises the actuator system according to any one of the preceding embodiments, and a radiation source arranged to irradiate the internal structure of the object.

According to this embodiment, the actuator system is able to accurately move the object relative to the radiation source. This way, the radiation source is able to irradiate the internal structure of the object with improved precision. As a result, the tomographic apparatus generates improved images of the internal structure of the object. For example, the radiation source is an x-ray source adapted to provide an x-ray beam to irradiate the internal structure. For example, the tomographic apparatus is adapted to generate a 3D-image of the internal structure of the object.

### Gravity compensator

In a second aspect, it is an objective of the invention to provide an improved gravity compensator, or to at least provide an alternative gravity compensator.

The objective is achieved by a gravity compensator for supporting a weight of a first body. The gravity compensator comprises a first magnet connectable to the first body, an inner magnet connectable to a second body, and an outer magnet ring connectable to the second body. The outer magnet ring is arranged concentrically and radially outward to the inner magnet. The first magnet is coaxial with an axis in an axial direction. The first magnet is arranged to face the inner magnet and the outer magnet ring in the axial direction to generate a repulsive force in the axial direction.

The first body is moveable relative to the second body. For example, the first body can be a rotor, and the second body can be a stator as described in the actuator system above. The axial direction is at least partly in the vertical direction. Gravity tries to move the first body in the axial direction relative to the second body. It is undesirable to use an actuator to provide a compensation force to compensate for the weight of the rotor, because this would result in continuous heat generation by the actuator. Therefore, the gravity compensator is provided to generate the repulsive force in the axial direction between the first magnet on the first body, and the inner magnet and the outer magnet ring on the second body. Due to this repulsive force between the first body and the second body, the compensation force is provided by the gravity compensator. As the gravity compensator does not use active components, such as a coil, excessive heat generation is prevented.

The repulsive force is, for example, large enough to completely compensate for the weight of the first body. The repulsive force is, for example, large enough to compensate for a large portion of the weight of the first body. The weight of the first body includes, for example, the weight of any other components that are carried by the first body. Note that the weight of the first body may be less than the mass of the first body. For example, the weight of the rotor is less in case the axial direction is not exactly vertical. The more the axial direction deviates from the vertical direction, the less the weight of the first body becomes.

Because the first magnet faces the inner magnet and the outer magnet ring, the first magnet is able to move in the plane perpendicular to the axis relative to the inner magnet with only a minimum amount of change of the repulsive force. Without the outer magnet ring, a movement of the first body relative to the second body in the plane perpendicular to the axis would significantly change the repulsive force. The significant change of the repulsive force would disturb accurate movement of the first body. Because the gravity compensator comprises the inner magnet and the outer magnet ring, the repulsive force remains substantially the same independently of the position of the first body in the plane perpendicular to the axis. This way, the weight of the first body is supported without introducing disturbances during movement of the first body. It has also been observed that the arrangement having an inner magnet and an outer magnet ring causes less parasitic torques. This way, an improved gravity compensator is provided.

In an embodiment, the inner magnet and the outer magnet ring are arranged with a radial opening between the inner magnet and the outer magnet ring.

According to this embodiment, the radial opening helps to maintain a substantially constant repulsive force while moving the first body along the plane perpendicular to the axis.

In an embodiment, the first magnet extends radially across the radial opening.

According to this embodiment, the first magnet is large enough to extend radially across the radial opening. For example, during any movement of the first body in the plane perpendicular to the axis, the first magnet extends radially across the radial opening.

In an embodiment, the first magnet is moveable, in a range of movement, relative to the inner magnet and the outer magnet ring in a direction perpendicular to the axis. The first magnet extends radially across the radial opening in the range of movement.

According to this embodiment, during any position in the range of movement, the first magnet extends radially across the radial opening. So in any position in the range of movement, the first magnet faces both the inner magnet and the outer magnet ring. As a result, the repulsive force is more constant in the range of movement.

In an embodiment, the inner magnet extends radially inward of the first magnet, and wherein the outer magnet ring extends radially outward of the first magnet.

For example, the first magnet has an inner radius, i.e., the radius that defines a hole in the first magnet. The inner magnet has an inner radius that is smaller than the inner radius of the first magnet. The inner magnet has an outer radius that is larger than the inner radius of the first magnet. The first magnet has an outer radius, i.e., the radius that defines an outer edge of the first magnet. The outer magnet ring has an inner radius that is smaller than the outer radius of the first magnet. The outer magnet ring has an outer radius that is larger than the outer radius of the first magnet.

In an embodiment, the hole in the first magnet may serve the same purpose as the above described through hole in the rotor of the actuator system. The hole may for example be used to accommodate part of a heat control system adapted to control a heat or temperature of an object. By having the hole, the heat control system is, for example, able to provide heat exchange fluid via the hole close to the object. For example, the hole is used to accommodate wires for electric power or data signals. By arranging the wires in the through, the wires do not interfere with components outside the gravity compensator.

For example, the first magnet is adapted to prevent any part of the first magnet from moving radially inward of the inner radius of the inner magnet while the first body moves in the plane perpendicular to the axis in the range of movement. For example, the first magnet is adapted to prevent any part of the first magnet from moving radially outward of the outer radius of the outer magnet ring while the first body moves in the plane perpendicular to the axis in the range of movement.

For example, the inner radius of the first magnet is 20-30 mm. For example, the outer radius of the first magnet is 55 mm. For example, the outer radius of the inner magnet is 40 mm. For example, the outer radius of the outer magnet ring is 70 mm. For example, the thickness of the inner magnet, the outer magnet ring and the first magnet is 8 mm.

In an embodiment, the first magnet, the inner magnet and the outer magnet ring are axially magnetized.

According to this embodiment, the axial magnetization of the first magnet, the inner magnet and the outer magnet ring helps to generate the repulsive force. In an embodiment, magnetization direction of the inner magnet and the outer magnet ring is opposite to the magnetization direction of the first magnet. As such, north poles of the inner magnet and the outer magnet ring may face a north pole of the first magnet.

In an embodiment, the inner magnet and the first magnet form a through hole along the axis.

In an embodiment, the gravity compensator comprises a second magnet, e.g. a ring shaped magnet, arranged on the second body coaxially to the inner magnet. The inner magnet is arranged axially between the first magnet and the second magnet. In an embodiment, the second magnet is arranged at an axial offset from the inner magnet.

According to this embodiment, the second magnet is placed on the second body on a side of the inner magnet opposite to the first body. There is a distance between the second magnet and the inner magnet in the axial direction. By placing the second magnet at the offset from the inner magnet, the magnitude of the repulsion force is altered. By placing the second magnet, the repulsion force is altered to better match with the weight of the first body. For example, the axial offset is 1-20 mm, for example 5-15 mm.

In an embodiment, the gravity compensator comprises a magnet holder adapted to hold the second magnet and the inner magnet relative to each other. The magnet holder is adapted to adjust the axial offset between the second magnet and the inner magnet.

According to this embodiment, the magnet holder allows the axial offset between the second magnet and the inner magnet to be adjusted. By adjusting the axial offset, the repulsive force is altered. For example, in case the actuator system is used to support objects with different weights, the magnet holder allows the altering of the repulsive force of each object individually. In case the object has a small weight, the magnet holder is used to set the axial offset to reduce the repulsive force. In case the object has a large weight, the magnet holder is used to set the axial offset to increase the repulsive force. For example, the magnet holder is adapted to manually adjust the axial offset. For example, the magnet holder comprises a thread arranged guide the second magnet in the axial direction. For example, the magnet holder comprises one or more spacers to set a position of the second magnet in the axial direction. For example, the magnet holder is adapted to automatically adjust the axial offset. For example, the magnet holder comprises an actuator, such as a spindle or a piezo stepper or a stepper motor to move the second magnet in the axial direction. Preferable, the magnet holder is adapted use the actuator only when moving the second magnet in the axial direction, but not when holding the second magnet at a desired axial offset. For example, the magnet holder comprises a clamping mechanism to hold the second magnet at the desired axial offset.

In an embodiment, the inner magnet and the second magnet have at least one of a same diameter and a same thickness.

In an embodiment, the second magnet is axially magnetized.

In an embodiment, the inner magnet, the first magnet and the second magnet form a through hole along the axis.

In an embodiment the first magnet is rotatable about the axis relative to the inner magnet and the outer magnet ring.

In an embodiment, the gravity compensator comprises a coil connectable to the second body for adjusting a magnetic field of the inner magnet. The inner magnet is arranged axially between the first magnet and the coil.

In an embodiment there is provided an actuator system comprising the gravity compensator according to any one of the preceding embodiments. The actuator system comprises a rotor and a stator. The rotor comprises the first body, and the stator comprises the second body.

In an embodiment, the rotor is rotatable along an axis extending in an axial direction. The rotor is moveable relative to the stator in a direction perpendicular to the axis. Preferably, the rotor adapted to rotate about the axis over more than 360°.

In an embodiment, the actuator system comprises a magnetic track and a plurality of coils arranged to cooperate with the magnetic track to generate electromagnetic forces. The actuator system is adapted to generate a first set of electromagnetic forces to move the rotor relative to the stator in a plane perpendicular to the axis in two directions perpendicular to each other, and to rotate the rotor about the axis. The actuator system is adapted to generate a second set of electromagnetic forces to move the rotor relative to the stator in the axial direction, and to tilt the rotor about two rotational axes perpendicular to each other and extending in the plane perpendicular to the axis.

According to this embodiment, a plurality of coils is provided. A first set of coils is arranged to provide the first set of electromagnetic forces. A second set of coils is arranged to provide the second set of electromagnetic forces. For example, the first set has at least three coils. The coils are arranged at different angular distances relative to the axis. For example, the radial distance relative to the axis is the same for all coils in the first set. For example, the coils are arranged rotational symmetrically around the axis. For example, there are three coils in the first set that are arranged at angles of 120° relative to each other. In another examples, there are four coils in the first set that are arranged at angles of 90° relative to each other. The coils of the first set are arranged to cooperate together with a magnetic track, for example a circular magnetic track, to generate the first set of electromagnetic forces. The first set of electromagnetic forces is in the plane perpendicular to the axis. By setting the magnitudes of the multiple electromagnetic forces, the first body is moveable in the plane perpendicular to the axis in three degrees of freedom. These three degrees of freedom are a rotation about the axis, and two translations in the plane. The two translations are perpendicular to each other. The rotation about the axis is, for example, over a large range, for example 90° or 180° or 360° or more. Each of the two translations is, for example, over a small range, for example less than 1 mm or less than 0.5 mm or less than 0.1 mm.

For example, the second set of coils has at least three coils. The coils of the second set are arranged at different angular distances relative to the axis. For example, the radial distance relative to the axis is the same for all coils in the second set. For example, the coils are arranged rotational symmetrically around the axis. For example, there are three coils in the second set that are arranged at angles of 120° relative to each other. In another examples, there are four coils in the second set that are arranged at angles of 90° relative to each other. The coils of the second set are arranged to cooperate together with the magnetic track, for example the circular magnetic track, to generate the second set of electromagnetic forces. The second set of electromagnetic forces is in the axial direction. By setting the magnitudes of the second set of electromagnetic forces, the first body is moveable in three degrees of freedom. These three degrees of freedom are a translation in the axial direction, and two rotations. Each rotation is about a rotational axis. The two rotational axes are in the plane perpendicular to the axis and are perpendicular to each other. The translation in the axial direction is, for example, over a large range. The large range is, for example, more than 1 mm or more than 10 mm. The rotation about each of the rotational axes is, for example, over a small range. The small range is, for example, less than ± 5°, or less than ± 1°, or less than ± 0.5°.

In an embodiment, the actuator system is adapted to move the rotor relative to the stator in six degrees of freedom.

According to this embodiment, the actuator system is configured to move the first body in six degrees of freedom by controlling the first set of electromagnetic forces and the second set of electromagnetic forces. For example, the actuator system is able to control the first body relative to the second body in six degrees of freedom by controlling three degrees of freedom with the first set of electromagnetic forces and by controlling the three remaining degrees of freedom with the second set of electromagnetic forces. This way, the position and/or movement of the object can be controlled with a high accuracy.

The invention will be described in more detail below under reference to the figures. The figures show in:
Fig. 1: a cross-section of an actuator system according to an embodiment of the invention.
Fig. 2: an exploded view of the actuator system according to the embodiment of Fig. 1.
Fig. 3: a detail view of the coils of the actuator system according to the embodiment of Fig. 1.
Fig. 4: a detailed top view of the radial air gap of the actuator system according to the embodiment of Fig. 1.
Fig. 5: a cross-section of a gravity compensator according to an embodiment of the invention.
Fig. 6: the cross-section of Fig. 5, with the first body in a different position.
Fig. 7: a graph depicting the repulsive force of the gravity compensator of Fig. 5.

In the figures, use is made of a Cartesian coordinate system. The z-axis corresponds to the axial direction of the actuator system. The x-axis and the y-axis are perpendicular to each other and to the z-axis. The x-axis and the y-axis are in the radial directions. For example, the z-axis is in the vertical direction.

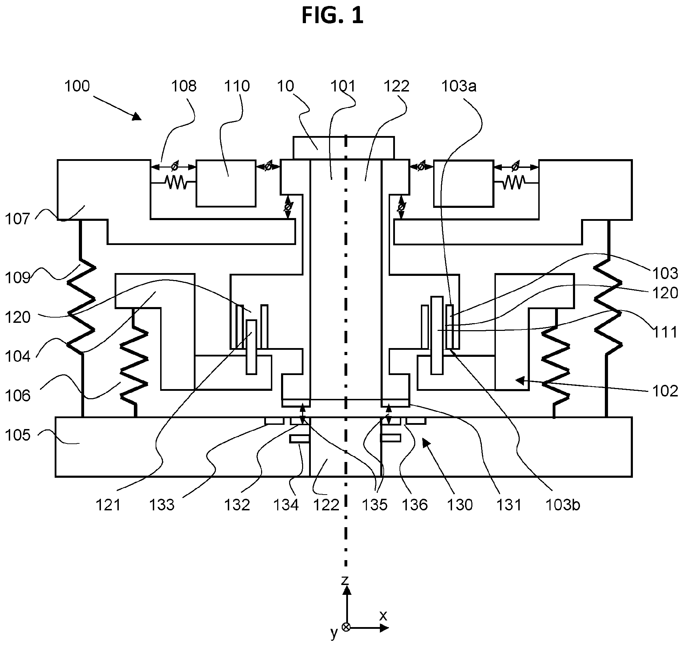

Fig. 1 depicts a cross-section of an actuator system 100 according to an embodiment of the invention. The actuator system 100 is for moving an object 10. The actuator system 100 comprises a rotor 101 for supporting the object 10, and a stator 102. The rotor 101 comprises a circular magnetic track 103 for generating a magnetic field across a radial air gap 120. The circular magnetic track 103 is coaxial to an axis, i.e., the z-axis, extending in an axial direction, i.e., the z-direction. The stator 102 comprises a first set of coils 111 and a second set of coils 121. The first set of coils 111 and the second set of coils 121 are arranged at least partly in the radial air gap 120. The first set of coils 111 extends axially on both sides (sides 103a, 103b) beyond the circular magnetic track 103. The second set of coils 121 extends axially on only one side (103b) beyond the circular magnetic track 103.

The stator 102 comprises a reaction mass 104 and a base frame 105. The first set of coils 111 and the second set of coils 112 are mounted to the reaction mass 104. The reaction mass 104 is moveably connected to the base frame 105 via a first spring 106. In such embodiment, the first spring 106 may e.g. have a low stiffness. Depending on the application, a comparatively high stiffness may be applied as well, e.g. having a rigid connection between the first set of coils 111, the second set of coils 121 and the base frame 105. Alternatively, the first spring 106 may be designed to suspend or support the reaction mass 104 with a defined eigenfrequency.

The actuator system 100 comprises a sensor frame 107 and a sensor 108. The sensor frame 107 is moveably connected to the base frame 105 via a second spring 109. The same considerations regarding stiffness as described above for the first spring 109 can be applied for the second spring 109. The sensor frame 107 supports the sensor 108. The sensor 108 is arranged to provide a signal representative of a position of the rotor 101 via a metrology frame 110. The sensor 108 determines the position of the metrology frame 110 relative to the sensor frame 107, and subsequently the position of the metrology frame 110 relative to a lateral surface of the rotor 101.

The rotor 101 is provided with a through hole 122 extending along the axis. Also the stator 102 is provided with a through hole aligned with through hole 122 to accommodate the rotor 101.

The actuator system 100 comprises a gravity compensator 130 for supporting a weight of the rotor 101. The gravity compensator 130 comprises a rotor magnet 131 arranged coaxially on the rotor 101, an inner magnet 132 arranged on the stator 102, in this example on the base plate 105, and an outer magnet ring 133 arranged on the stator 102 concentrically and radially outward to the inner magnet 132. At least one of the rotor magnet 131 and the inner magnet 132 is a ring. In the embodiment, both the rotor magnet 131 and the inner magnet 132 are rings. Alternatively, one of the rotor magnet 131 and the inner magnet 132 is a disc-shaped magnet. The rotor magnet 131 is arranged to face the inner magnet 132 and the outer magnet ring 133 in the axial direction to generate a repulsive force 135 in the axial direction.

The inner magnet 132 and the outer magnet ring 133 are arranged with a radial opening 136 between the inner magnet 132 and the outer magnet ring 133.

The rotor magnet 131 extends radially across the radial opening 136. The inner magnet 132 extends radially inward of the rotor magnet 131. The outer magnet ring 133 extends radially outward of the rotor magnet 131. The rotor magnet 131, the inner magnet 132 and the outer magnet ring 133 are axially magnetized. The inner magnet 132 and the rotor magnet 131 form the through hole 122 along the axis. In the embodiment as shown, the through hole 122 is provided along both the stator and the rotor. The through hole 122 can for example be used to accommodate part of a heat control system adapted to control a heat of the object. By having the through hole, the heat control system is, for example, able to provide heat exchange fluid via the through hole close to the object 10. Alternatively, or in addition, the through hole 122 is used to accommodate wires for electric power or data signals. By arranging the wires in the through hole, the wires do not interfere with components outside the rotor.

The actuator system 100 comprises a stator magnet 134 arranged on the stator 102 coaxially to the inner magnet 132. The inner magnet 132 is arranged axially between the rotor magnet 131 and the stator magnet 134. In an embodiment, the inner magnet 132 and the stator magnet 134 have the same diameter and/or the same thickness. In an embodiment, the stator magnet 134 is axially magnetized. The inner magnet 132, the rotor magnet 131 and the stator magnet 134 form the through hole 122 along the axis.
In an embodiment, the stator magnet 134 is arranged at an axial offset from the inner magnet 132. According to this embodiment, the stator magnet 134 is placed on the second body on a side of the inner magnet opposite to the first body. There is a distance between the stator magnet 134 and the inner magnet 132 in the axial direction. By placing the stator magnet 134 at the offset from the inner magnet 132, the magnitude of the repulsion force is altered. By placing the stator magnet 134, the repulsion force is altered to better match with the weight of the first body. For example, the axial offset is 1-20 mm, for example 5-15 mm.

In an embodiment, the gravity compensator 130 comprises a magnet holder adapted to hold the stator magnet 134 and the inner magnet 132 relative to each other. The magnet holder is adapted to adjust the axial offset between the second magnet and the inner magnet.

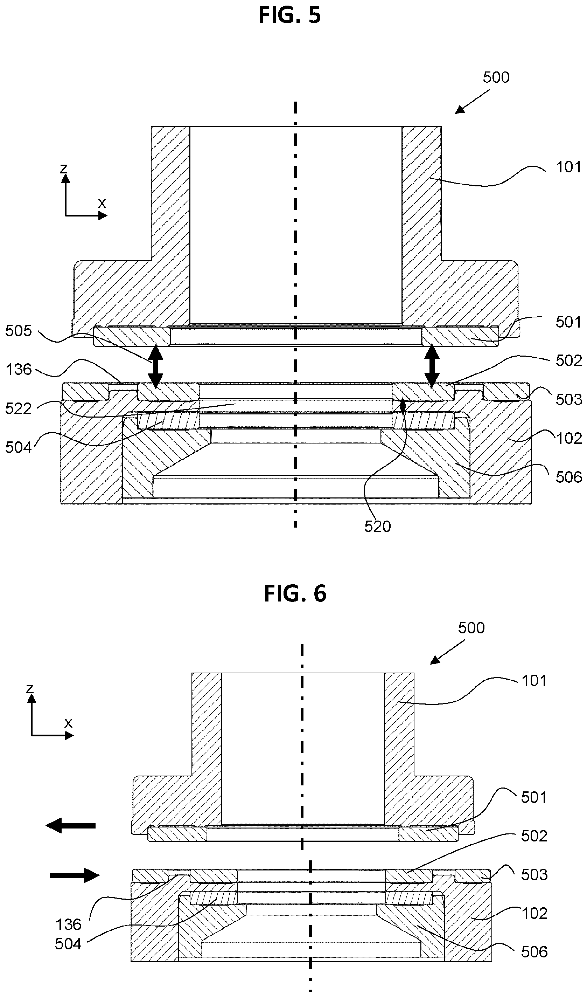

The magnet holder as can be applied is explained in more detail below with reference to figures 5 and 6.

In an embodiment, the actuator system 100 is part of a tomographic apparatus for generating an image of an internal structure of the object 10. The tomographic apparatus further comprises a radiation source arranged to irradiate the internal structure of the object 10.

The sensor frame 107 comprises one or more sensors 108 to determine a position of the metrology frame 110. The sensor frame 107 comprises one or more sensors to determine a position, such as an axial position, of the rotor. The sensor frame 107 is, for example, arranged to moveably support the metrology frame 110 to allow movement of the metrology frame 110 relative to the sensor frame in a radial direction.

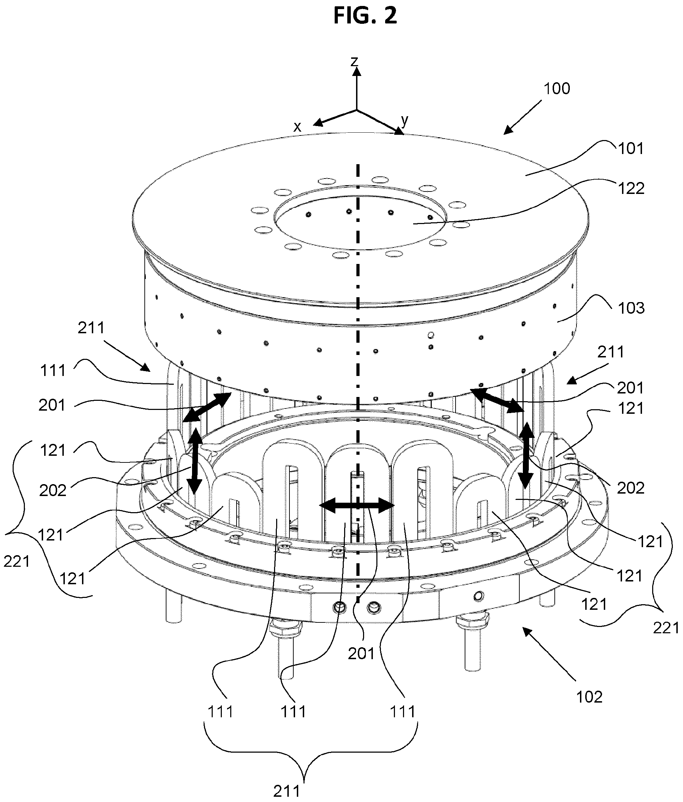

Fig. 2 depicts an exploded view of the actuator system 100 according to the embodiment of Fig. 1. In the exploded view, the rotor 101 and the stator 102 are depicted at an axial offset from each other.

The coils of the first set of coils 111 have a longer length in the axial direction than the coils of the second set of coils 121. The first set of coils 111 comprises three first coil groups 211. Each of the first coil groups 211 has three coils. The three first coil groups 211 arranged at different angular distances relative to the axis.

The three first coil groups 211 are arranged to generate three tangential electromagnetic forces 201 to move the rotor 101 relative to the stator 102 in a plane perpendicular to the axis in two directions perpendicular to each other, and to rotate the rotor 101 about the axis. In each of the three first coil groups 211, the three coils cooperate together to generate one of the tangential electromagnetic forces 201.

The second set of coils 121 comprises three second coil groups 221. Only two second coil groups 221 are depicted in the figure. The third second coil group 221 is hidden behind the circular magnetic track 103. Each of the second coil groups 221 has three coils. The second coil groups 221 are arranged at different angular distances relative to the axis. The three second coil groups 221 are arranged to generate three axial electromagnetic forces 202 to move the rotor 101 relative to the stator 102 in the axial direction, and to tilt the rotor 101 about two rotational axes perpendicular to each other and extending in the plane perpendicular to the axis. The three axial electromagnetic forces 202 are able to move the rotor 101 in along the z-axis, to rotate the rotor 101 about the x-axis and to rotate the rotor 101 about the y-axis. Only two second axial electromagnetic forces 202 are depicted in the figure. The third axial electromagnetic forces 202 is hidden behind the circular magnetic track 103. In each of the three second coil groups 221, the three coils cooperate together to generate one of the axial electromagnetic forces 202.

The actuator system 100 comprises a control unit (not shown in the figures) configured to control the first set of coils 111 and the second set of coils 121 to move the rotor 101 relative to the stator 102 in six degrees of freedom.

The actuator system 100 is adapted to provide the three first coil groups 211 and the three second coil groups 221 with three phase commutation.

The coils of the first set 111 and the coils of the second set 121 are arranged in an alternating pattern by alternately arranging the first coil groups 211 and the second coil groups 221.

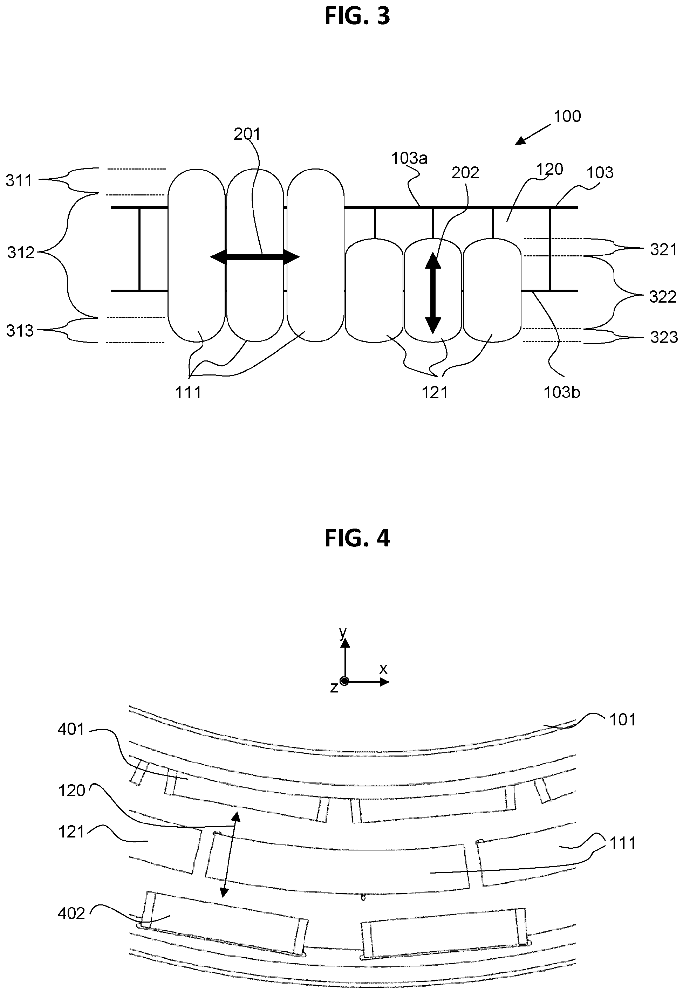

Fig. 3 depicts a detailed view of the coils of the actuator system 100 according to the invention of Fig. 1.

Each of the coils has two end sections and a middle section arranged between the two end sections in the axial direction. The coils of the first set of coils 111 each have an end section 311, a middle section 312, and an end section 313. The coils of the second set of coils 121 each have an end section 321, a middle section 322, and an end section 323. The middle sections 312 and 322 each comprise a wire mainly extending in the axial direction. The end sections 311, 313, 321, 323 each comprise the wire extending tangentially to the circular magnetic track 103. The wires in the end sections 311, 313, 321, 323 are arranged in the shape of a circle segment. Each coil of the first set of coils 111 is arranged with the middle section 312 in the radial air gap 120. Each coil of the first set of coils 111 is arranged with the end sections 311, 313 outside the radial air gap 120. Each coil of the second set is arranged with one end section 321 in the radial air gap 120 and with one end section 323 outside the radial air gap 120.

The first set of coils 111 extends axially on both sides 103a, 103b beyond the circular magnetic track 103 to generate a tangential electromagnetic force 201 in a direction tangentially to the circular magnetic track 103 to rotate the rotor 101 relative to the stator 102 about the axis. The second set of coils 112 extends axially on only one side 103b beyond the circular magnetic track 103 to generate an axial electromagnetic force 202 in the axial direction to move the rotor 101 relative to the stator 102 in the axial direction. The second set of coils 112 may also be used for generating forces in the xy-plane.

Fig. 4 depicts a detailed top view of the radial air gap 120 of the actuator system 100 according to the embodiment of Fig. 1. The circular magnetic track 103 has an outer magnetic array 402 and an inner magnetic array 401 arranged radially inward of the outer magnetic array 402. The radial air gap 120 extends radially between the outer magnetic array 402 and the inner magnetic array 401. The three first coil groups 211 are arranged to generate the three tangential electromagnetic forces 201 to radially move the first set of coils 111 through the radial air gap 120. Since the first set of coils 111 and the second set of coils 121 are all part of the stator 102, also the second set of coils 121 are moveable through the radial air gap 120 in the radial direction.

Figs. 5 and 6 depict a cross-section of a gravity compensator 500 according to an embodiment of the invention.

The gravity compensator 500 is for supporting a weight of a first body, for example, the rotor 101 of the embodiment above. The gravity compensator 500 comprises a first magnet 501 connectable to the first body, an inner magnet 502 connectable to a second body, and an outer magnet ring 503 connectable to the second body. The second body is, for example, the stator 102 of the embodiment above. At least one of the first magnet 501 and the inner magnet 502 is a ring. The outer magnet ring 503 is arranged concentrically and radially outward to the inner magnet 502. The first magnet 501 is coaxial with an axis in an axial direction, i.e., the z-axis. The first magnet 501 is arranged to face the inner magnet 502 and the outer magnet ring 503 in the axial direction to generate a repulsive force 505 in the axial direction.

The inner magnet 502 and the outer magnet ring 503 are arranged with a radial opening 136 between the inner magnet 502 and the outer magnet ring 503. The first magnet 501 extends radially across the radial opening 136.

The first magnet 501 is moveable, in a range of movement, relative to the inner magnet 502 and the outer magnet ring 503 in a direction perpendicular to the axis. In Fig. 5, the first body is in a first radial position in the range of movement. In Fig. 6, the first body is in a second radial position in the range of movement. The first body has moved to the left relative to the second body, as indicated by the two arrows. In the first position as well as in the second position, the first magnet 501 extends radially across the radial opening 136 in the range of movement.

The inner magnet 502 extends radially inward of the first magnet 501, and wherein the outer magnet ring 503 extends radially outward of the first magnet 501. The first magnet 501, the inner magnet 502 and the outer magnet ring 503 are axially magnetized. The inner magnet 502 and the first magnet 501 form a through hole 522 along the axis.

The gravity compensator 500 comprises a second magnet 504 connectable to the second body and coaxially to the inner magnet 502. The inner magnet 502 is arranged axially between the first magnet 501 and the second magnet 504.

The gravity compensator 500 comprises a magnet holder 506 adapted to hold the second magnet 504 and the inner magnet 502 relative to each other. The magnet holder 506 is adapted to adjust an axial distance 520 between the second magnet 504 and the inner magnet 502. For example, the magnet holder 506 has a threaded outer lateral surface to contact a threaded surface of a bore in the stator 102. By rotating the magnet holder 506 relative to the second body, the axial distance 520 is adjusted.

The inner magnet 502 and the second magnet 504 have at least one of a same diameter and a same thickness. The second magnet 504 is axially magnetized. The inner magnet 502, the first magnet 501, and the second magnet 504 form a through hole 522 along the axis.

The first magnet 501 is rotatable about the axis relative to the inner magnet 502 and the outer magnet ring 503. By rotating the first body relative to the second body about the axis, the first magnet 501 rotates relative to the inner magnet 502 and the outer magnet ring 503.

Optionally the gravity compensator 500 comprises a coil connectable to the second body for adjusting a magnetic field of the inner magnet 502. The inner magnet 502 is arranged axially between the first magnet 501 and the coil.

Optionally the gravity compensator 500 is provided in an actuator system 100, such as the actuator system 100 as described above. However, the gravity compensator 500 may be provided in a different actuator system.

The actuator system 100 comprises a rotor 101 and a stator 102. The rotor 101 comprises the first body. The stator 102 comprises the second body.

The rotor 101 is rotatable about an axis extending in an axial direction. The rotor 101 is moveable relative to the stator 102 in a direction perpendicular to the axis. The rotor 101 is preferably adapted to rotate about the axis over more than 360°.

The actuator system 100 comprises a magnetic track, such as the circular magnetic track 103, and a plurality of coils, such as the first set of coils 111 and the second set of coils 121, arranged to cooperate with the magnetic track to generate electromagnetic forces. The actuator system 100 is adapted to generate a first set of electromagnetic forces to move the rotor 101 relative to the stator 102 in a plane perpendicular to the axis in two directions perpendicular to each other, and to rotate the rotor 101 about the axis.

The actuator system 100 is adapted to generate a second set of electromagnetic forces to move the rotor 101 relative to the stator 102 in the axial direction, and to tilt the rotor 101 about two rotational axes perpendicular to each other and extending in the plane perpendicular to the axis.

The actuator system 100 is adapted to move the rotor 101 relative to the stator 102 in six degrees of freedom.

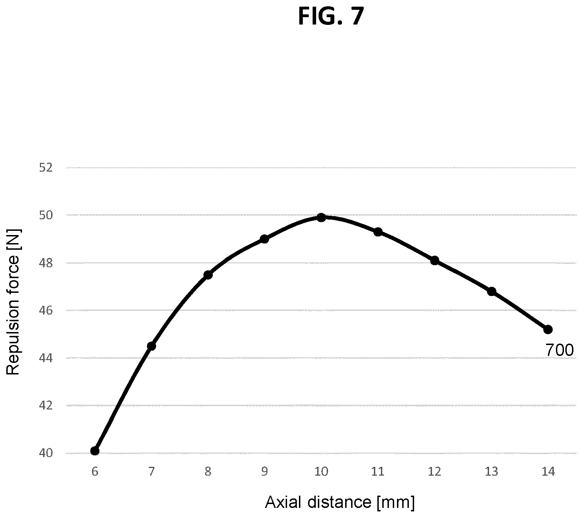

Fig. 7 depicts a graph with a line 700 indicating the repulsive force 505 of the gravity compensator 500 of Figs. 5 and 6. The line 700 indicates the relationship between the repulsive force 505 and the axial distance between the stator 102 and the rotor 101. By adjusting the axial distance 520 between the second magnet 504 and the inner magnet 502, the repulsive force 505 can be adjusted; i.e. the position of the line 700 will shift upward or downward.

For example, the gravity compensator 500 is used in the actuator system 100 as described in Figs. 1-4. For example, the gravity compensator 130 is the same as the gravity compensator 500.

## Claims

1. An actuator system (100) for moving an object (10), comprising
a rotor (101) for supporting the object (10); and
a stator (102),
wherein the rotor (101) comprises a circular magnetic track (103) for generating a magnetic field across a radial air gap (120),
wherein the circular magnetic track (103) is coaxial to an axis (z) extending in an axial direction,
wherein the stator (102) comprises a first set of coils (111) and a second set of coils (121),
wherein the first set of coils (111) and the second set of coils (121) are arranged at least partly in the radial air gap (120),
wherein the first set of coils (111) extends axially on both sides (103a, 103b) beyond the circular magnetic track (103) to generate a tangential electromagnetic force (201) in a direction tangentially to the circular magnetic track (103) to rotate the rotor (101) relative to the stator (102) about the axis,
wherein the second set of coils (121) extends axially on only one side (103b) beyond the circular magnetic track (103) to generate an axial electromagnetic force (202) in the axial direction to move the rotor (101) relative to the stator (102) in the axial direction,
wherein each of the coils has two end sections (311, 313, 321, 323) and a middle section (312, 322) arranged between the two end sections (311, 313, 321, 323) in the axial direction,
wherein the middle section (312, 322) comprises a wire mainly extending in the axial direction,
wherein the end section (311, 313, 321, 323) comprises the wire extending tangentially to the circular magnetic track (103),
wherein each coil of the first set of coils (111) is arranged with the middle section (312) in the radial air gap (120), wherein each coil of the first set of coils (111) is arranged with the end sections (311, 313) outside the radial air gap (120),
wherein each coil of the second set of coils (121) is arranged with one end section (323) in the radial air gap (120) and with one end section (321) outside the radial air gap (120).

2. Actuator system (100) according to any one of the preceding claims, wherein the coils of the first set of coils (111) have a longer length in the axial direction than the coils of the second set of coils (121).

3. Actuator system (100) according to any one of the preceding claims, wherein the first set of coils (111) comprises three first coil groups (211),
wherein each of the first coil groups (211) has three coils,
wherein the coils of the three first coil groups (211) coils arranged at different angular distances relative to the axis,
wherein the three first coil groups (211) are arranged to generate three tangential electromagnetic forces (201) to move the rotor (101) relative to the stator (102) in a plane perpendicular to the axis in two directions perpendicular to each other, and to rotate the rotor (101) about the axis.

4. Actuator system (100) according to claim 3, wherein the circular magnetic track (103) has an outer magnetic array (402) and an inner magnetic array (401) arranged radially inward of the outer magnetic array (402),
wherein the radial air gap (120) extends radially between the outer magnetic array (402) and the inner magnetic array (401),
wherein the three first coil groups (211) are arranged to generate the three tangential electromagnetic forces (201) to radially move the first set of coils (111) through the radial air gap (120).

5. Actuator system (100) according to claim 3 or 4, wherein the second set of coils (121) comprises three second coil groups (221),
wherein each of the second coil groups (221) has three coils,
wherein the coils of the second coil groups (221) are arranged at different angular distances relative to the axis,
wherein the three second coil groups (221) are arranged to generate three axial electromagnetic forces (202) to move the rotor (101) relative to the stator (102) in the axial direction, and to tilt the rotor (101) about two rotational axes perpendicular to each other and extending in the plane perpendicular to the axis.

6. Actuator system (100) according to claim 5, comprising a control unit configured to control the first set of coils (111) and the second set of coils (121) to move the rotor (101) relative to the stator (102) in six degrees of freedom.

7. Actuator system (100) according to any one of claims 3-6, wherein the actuator system (100) is adapted to supply the three first coil groups (211) and/or the three second coil groups (221) using three phase commutation.

8. Actuator system (100) according to any one of the preceding claims, wherein the coils of the first set and the coils of the second set are arranged in an alternating pattern.

9. Actuator system (100) according to any one of the preceding claims, comprising a reaction mass (104) and a base frame (105),
wherein the stator (102) is mounted to the reaction mass (104),
wherein the reaction mass (104) is moveably connected to the base frame (105).

10. Actuator system (100) according to claim 9, comprising a sensor frame (107) and a sensor (108),
wherein the sensor frame (107) is moveably connected to the base frame (105),
wherein the sensor frame (107) supports the sensor (108),
wherein the sensor (108) is arranged to provide a signal representative of a position of the rotor (101).

11. Actuator system (100) according to any one of the preceding claims, wherein each of the stator (102) and the rotor (101) are provided with a through hole (122) extending along the axis.

12. Actuator system (100) according to any one of the preceding claims, comprising a gravity compensator (130) for supporting a weight of the rotor (101), the gravity compensator (130) comprising:
a rotor magnet (131) arranged coaxially on the rotor (101),
an inner magnet (132) arranged on the stator (102), and
an outer magnet ring (133) arranged on the stator (102) concentrically and radially outward to the inner magnet (132),
wherein at least one of the rotor magnet (131) and the inner magnet (132) is a ring,
wherein the rotor magnet (131) is arranged to face the inner magnet (132) and the outer magnet ring (133) in the axial direction to generate a repulsive force (135) in the axial direction.

13. Actuator system (100) according to claim 12, wherein the inner magnet (132) and the outer magnet ring (133) are arranged with a radial opening (136) between the inner magnet (132) and the outer magnet ring (133).

14. Actuator system (100) according to claim 13, wherein the rotor magnet (131) extends radially across the radial opening (136).

15. Actuator system (100) according to any one of claims 12-14, wherein the rotor magnet (131) is a ring,
wherein the inner magnet (132) is a ring extends radially inward of the rotor magnet (131), and wherein the outer magnet ring (133) extends radially outward of the rotor magnet (131).

16. Actuator system (100) according to any one of claims 12-15, wherein the rotor magnet (131), the inner magnet (132) and the outer magnet ring (133) are axially magnetized.

17. Actuator system (100) according to any one of claims 12-16, wherein the inner magnet (132) and the rotor magnet (131) both are rings forming a through hole (122) along the axis.

18. Actuator system (100) according to any one of claims 12-17, comprising a stator magnet (134) arranged on the stator (102) coaxially to the inner magnet (132),
wherein the inner magnet (132) is arranged axially between the rotor magnet (131) and the stator magnet (134).

19. Actuator system (100) according to claim 18, wherein the inner magnet (132) and the stator magnet (134) have at least one of a same diameter and a same thickness.

20. Actuator system (100) according to claim 18 or 19, wherein the stator magnet (134) is axially magnetized.

21. Actuator system (100) according to any one of claims 18-20, wherein the inner magnet (132), the rotor magnet (131) and the stator magnet (134) are rings forming a through hole (122) along the axis.

22. A tomographic apparatus for generating an image of an internal structure of the object (10), comprising the actuator system (100) according to any one of the preceding claims, and a radiation source arranged to irradiate the internal structure of the object (10).

## Patentansprüche

1. Aktuatorsystem (100) zum Bewegen eines Objekts (10), umfassend
einen Rotor (101) zum Tragen des Objekts (10) und
einen Stator (102),
wobei der Rotor (101) eine kreisförmige Magnetspur (103) zum Erzeugen eines Magnetfelds über einen radialen Luftspalt (120) umfasst,
wobei die kreisförmige Magnetspur (103) koaxial zu einer Achse (z) ist, die sich in einer axialen Richtung erstreckt,
wobei der Stator (102) einen ersten Satz Spulen (111) und einen zweiten Satz Spulen (121) umfasst,
wobei der erste Satz Spulen (111) und der zweite Satz Spulen (121) zumindest teilweise in dem radialen Luftspalt (120) angeordnet sind,
wobei sich der erste Satz Spulen (111) axial auf beiden Seiten (103a, 103b) über die kreisförmige Magnetspur (103) hinaus erstreckt, um eine tangentiale elektromagnetische Kraft (201) in einer Richtung tangential zur kreisförmigen Magnetspur (103) zu erzeugen, um den Rotor (101) relativ zum Stator (102) um die Achse zu drehen,
wobei sich der zweite Satz Spulen (121) axial nur auf einer Seite (103b) über die kreisförmige Magnetspur (103) hinaus erstreckt, um eine axiale elektromagnetische Kraft (202) in der axialen Richtung zu erzeugen, um den Rotor (101) relativ zum Stator (102) in die axiale Richtung zu bewegen,
wobei jede der Spulen zwei Endabschnitte (311, 313, 321, 323) und einen mittleren Abschnitt (312, 322), der in der axialen Richtung zwischen den zwei Endabschnitten (311, 313, 321, 323) angeordnet ist, aufweist,
wobei der mittlere Abschnitt (312, 322) einen Draht umfasst, der sich hauptsächlich in die axiale Richtung erstreckt,
wobei der Endabschnitt (311, 313, 321, 323) den Draht umfasst, der sich tangential zur kreisförmigen Magnetspur (103) erstreckt,
wobei jede Spule des ersten Satzes Spulen (111) mit dem mittleren Abschnitt (312) im radialen Luftspalt (120) angeordnet ist, wobei jede Spule des ersten Satzes Spulen (111) mit den Endabschnitten (311, 313) außerhalb des radialen Luftspalts (120) angeordnet ist,
wobei jede Spule des zweiten Satzes Spulen (121) mit einem Endabschnitt (323) im radialen Luftspalt (120) und mit einem Endabschnitt (321) außerhalb des radialen Luftspalts (120) angeordnet ist.

2. Aktuatorsystem (100) nach einem der vorhergehenden Ansprüche, wobei die Spulen des ersten Satzes Spulen (111) eine längere Länge in die axiale Richtung aufweisen als die Spulen des zweiten Satzes Spulen (121).

3. Aktuatorsystem (100) nach einem der vorhergehenden Ansprüche, wobei der erste Satz Spulen (111) drei erste Spulengruppen (211) umfasst,
wobei jede der ersten Spulengruppen (211) drei Spulen aufweist,
wobei die Spulen der drei ersten Spulengruppen (211) Spulen sind, die in unterschiedlichen Winkelabständen relativ zur Achse angeordnet sind,
wobei die drei ersten Spulengruppen (211) dazu angeordnet sind, drei tangentiale elektromagnetische Kräfte (201) zu erzeugen, um den Rotor (101) relativ zum Stator (102) in einer Ebene senkrecht zur Achse in zwei Richtungen senkrecht zueinander zu bewegen, und um den Rotor (101) um die Achse zu drehen.

4. Aktuatorsystem (100) nach Anspruch 3, wobei die kreisförmige Magnetspur (103) ein äußeres Magnetarray (402) und ein inneres Magnetarray (401) aufweist, die radial innerhalb des äußeren Magnetarrays (402) angeordnet sind,
wobei sich der radiale Luftspalt (120) radial zwischen dem äußeren Magnetarray (402) und dem inneren Magnetarray (401) erstreckt,
wobei die drei ersten Spulengruppen (211) dazu angeordnet sind, die drei tangentialen elektromagnetischen Kräfte (201) zu erzeugen, um den ersten Satz Spulen (111) radial durch den radialen Luftspalt (120) zu bewegen.

5. Aktuatorsystem (100) nach Anspruch 3 oder 4, wobei der zweite Satz Spulen (121) drei zweite Spulengruppen (221) umfasst,
wobei jede der zweiten Spulengruppen (221) drei Spulen aufweist,
wobei die Spulen der zweiten Spulengruppen (221) in unterschiedlichen Winkelabständen relativ zur Achse angeordnet sind,
wobei die drei zweiten Spulengruppen (221) dazu angeordnet sind, drei axiale elektromagnetische Kräfte (202) zu erzeugen, um den Rotor (101) relativ zum Stator (102) in die axiale Richtung zu bewegen und um den Rotor (101) um zwei Drehachsen zu kippen, die senkrecht zueinander sind und sich in der Ebene senkrecht zur Achse erstrecken.

6. Aktuatorsystem (100) nach Anspruch 5, umfassend eine Steuereinheit, die dazu ausgelegt ist, den ersten Satz Spulen (111) und den zweiten Satz Spulen (121) zu steuern, um den Rotor (101) relativ zum Stator (102) in sechs Freiheitsgraden zu bewegen.

7. Aktuatorsystem (100) nach einem der Ansprüche 3-6, wobei das Aktuatorsystem (100) dazu ausgelegt ist, die drei ersten Spulengruppen (211) und/oder die drei zweiten Spulengruppen (221) unter Verwendung einer Dreiphasenkommutierung zu versorgen.

8. Aktuatorsystem (100) nach einem der vorhergehenden Ansprüche, wobei die Spulen des ersten Satzes und die Spulen des zweiten Satzes in einem alternierenden Muster angeordnet sind.

9. Aktuatorsystem (100) nach einem der vorhergehenden Ansprüche, umfassend eine Reaktionsmasse (104) und einen Basisrahmen (105),
wobei der Stator (102) an der Reaktionsmasse (104) montiert ist,
wobei die Reaktionsmasse (104) mit dem Basisrahmen (105) beweglich verbunden ist.

10. Aktuatorsystem (100) nach Anspruch 9, umfassend einen Sensorrahmen (107) und einen Sensor (108),
wobei der Sensorrahmen (107) mit dem Basisrahmen (105) beweglich verbunden ist,
wobei der Sensorrahmen (107) den Sensor (108) stützt,
wobei der Sensor (108) dazu angeordnet ist, ein Signal bereitzustellen, das eine Position des Rotors (101) repräsentiert.

11. Aktuatorsystem (100) nach einem der vorhergehenden Ansprüche, wobei sowohl der Stator (102) als auch der Rotor (101) mit einer Durchgangsbohrung (122) versehen sind, die sich entlang der Achse erstreckt.

12. Aktuatorsystem (100) nach einem der vorhergehenden Ansprüche, das einen Schwerkraftkompensator (130) zum Tragen des Gewichts des Rotors (101) umfasst, wobei der Schwerkraftkompensator (130) Folgendes umfasst:
einen Rotormagneten (131), der koaxial auf dem Rotor (101) angeordnet ist,
einen am Stator (102) angeordneten inneren Magneten (132) und
einen äußeren Magnetring (133), der konzentrisch auf dem Stator (102) und radial nach außen zum inneren Magneten (132) angeordnet ist,
wobei der Rotormagnet (131) und/oder der innere Magnet (132) ein Ring ist,
wobei der Rotormagnet (131) so angeordnet ist, dass er dem inneren Magneten (132) und dem äußeren Magnetring (133) in der axialen Richtung zugewandt ist, um eine abstoßende Kraft (135) in der axialen Richtung zu erzeugen.

13. Aktuatorsystem (100) nach Anspruch 12, wobei der innere Magnet (132) und der äußere Magnetring (133) mit einer radialen Öffnung (136) zwischen dem inneren Magneten (132) und dem äußeren Magnetring (133) angeordnet sind.

14. Aktuatorsystem (100) nach Anspruch 13, wobei sich der Rotormagnet (131) radial über die radiale Öffnung (136) erstreckt.

15. Aktuatorsystem (100) nach einem der Ansprüche 12-14, wobei der Rotormagnet (131) ein Ring ist,
wobei der innere Magnet (132) ein Ring ist, der sich vom Rotormagneten (131) radial nach innen erstreckt, und wobei sich der äußere Magnetring (133) vom Rotormagneten (131) radial nach außen erstreckt.

16. Aktuatorsystem (100) nach einem der Ansprüche 12-15, wobei der Rotormagnet (131), der innere Magnet (132) und der äußere Magnetring (133) axial magnetisiert sind.

17. Aktuatorsystem (100) nach einem der Ansprüche 12-16, wobei der innere Magnet (132) und der Rotormagnet (131) beide Ringe sind, die eine Durchgangsbohrung (122) entlang der Achse bilden.

18. Aktuatorsystem (100) nach einem der Ansprüche 12-17, umfassend einen Statormagneten (134), der koaxial zum inneren Magneten (132) auf dem Stator (102) angeordnet ist,
wobei der innere Magnet (132) axial zwischen dem Rotormagneten (131) und dem Statormagneten (134) angeordnet ist.

19. Aktuatorsystem (100) nach Anspruch 18, wobei der innere Magnet (132) und der Statormagnet (134) den gleichen Durchmesser und/oder die gleiche Dicke aufweisen.

20. Aktuatorsystem (100) nach Anspruch 18 oder 19, wobei der Statormagnet (134) axial magnetisiert ist.

21. Aktuatorsystem (100) nach einem der Ansprüche 18-20, wobei der innere Magnet (132), der Rotormagnet (131) und der Statormagnet (134) Ringe sind, die eine Durchgangsbohrung (122) entlang der Achse bilden.

22. Tomographische Einrichtung zum Erzeugen eines Bildes einer internen Struktur des Objekts (10), umfassend das Aktuatorsystem (100) nach einem der vorhergehenden Ansprüche und eine Strahlungsquelle, die dazu angeordnet ist, die interne Struktur des Objekts (10) zu bestrahlen.

## Revendications

1. Système actionneur (100) pour mouvoir un objet (10), comprenant
un rotor (101) pour supporter l'objet (10) ; et
un stator (102),
dans lequel le rotor (101) comprend une piste magnétique circulaire (103) destinée à générer un champ magnétique en travers d'un entrefer radial (120),
dans lequel la piste magnétique circulaire (103) est coaxiale à un axe (z) s'étendant dans une direction axiale,
dans lequel le stator (102) comprend un premier ensemble de bobines (111) et un second ensemble de bobines (121),
dans lequel le premier ensemble de bobines (111) et le second ensemble de bobines (121) sont agencés au moins partiellement dans l'entrefer radial (120),
dans lequel le premier ensemble de bobines (111) s'étend axialement sur les deux côtés (103a, 103b) au-delà de la piste magnétique circulaire (103) pour générer une force électromagnétique tangentielle (201) dans une direction tangentielle à la piste magnétique circulaire (103) pour entraîner la rotation du rotor (101) relativement au stator (102) autour de l'axe,
dans lequel le second ensemble de bobines (121) s'étend axialement sur seulement un côté (103b) au-delà de la piste magnétique circulaire (103) pour générer une force électromagnétique axiale (202) dans la direction axiale pour mouvoir le rotor (101) relativement au stator (102) dans la direction axiale,
dans lequel chacune des bobines a deux sections d'extrémité (311, 313, 321, 323) et une section médiane (312, 322) agencée entre les deux sections d'extrémité (311, 313, 321, 323) dans la direction axiale,
dans lequel la section médiane (312, 322) comprend un fil s'étendant principalement dans la direction axiale,
dans lequel la section d'extrémité (311, 313, 321, 323) comprend le fil s'étendant tangentiellement à la piste magnétique circulaire (103),
dans lequel chaque bobine du premier ensemble de bobines (111) est agencée avec la section médiane (312) dans l'entrefer radial (120), dans lequel chaque bobine du premier ensemble de bobines (111) est agencé avec les sections d'extrémité (311, 313) à l'extérieur de l'entrefer radial (120),
dans lequel chaque bobine du second ensemble de bobines (121) est agencée avec une section d'extrémité (323) dans l'entrefer radial (120) et avec une section d'extrémité (321) à l'extérieur de l'entrefer radial (120).

2. Système actionneur (100) selon l'une quelconque des revendications précédentes, dans lequel les bobines du premier ensemble de bobines (111) ont une longueur plus longue dans la direction axiale que les bobines du second ensemble de bobines (121).

3. Système actionneur (100) selon l'une quelconque des revendications précédentes, dans lequel le premier ensemble de bobines (111) comprend trois premiers groupes de bobines (211),
dans lequel chacun des premiers groupes de bobines (211) a trois bobines,
dans lequel les bobines des trois premiers groupes de bobines (211) sont agencées à des distances angulaires différentes relativement à l'axe,
dans lequel les trois premiers groupes de bobines (211) sont agencés pour générer trois forces électromagnétiques tangentielles (201) pour mouvoir le rotor (101) relativement au stator (102) dans un plan perpendiculaire à l'axe dans deux directions perpendiculaires l'une à l'autre, et pour entraîner la rotation du rotor (101) autour de l'axe.

4. Système actionneur (100) selon la revendication 3, dans lequel la piste magnétique circulaire (103) a un réseau magnétique extérieur (402) et un réseau magnétique intérieur (401) agencé radialement vers l'intérieur du réseau magnétique extérieur (402),
dans lequel l'entrefer radial (120) s'étend radialement entre le réseau magnétique extérieur (402) et le réseau magnétique intérieur (401),
dans lequel les trois premiers groupes de bobines (211) sont agencés pour générer les trois forces électromagnétiques tangentielles (201) pour mouvoir radialement le premier ensemble de bobines (111) à travers l'entrefer radial (120).

5. Système actionneur (100) selon la revendication 3 ou 4, dans lequel le second ensemble de bobines (121) comprend trois seconds groupes de bobines (221),
dans lequel chacun des seconds groupes de bobines (221) a trois bobines,
dans lequel les bobines des seconds groupes de bobines (221) sont agencées à des distances angulaires différentes relativement à l'axe,
dans lequel les trois seconds groupes de bobines (221) sont agencés pour générer trois forces électromagnétiques axiales (202) pour mouvoir le rotor (101) relativement au stator (102) dans la direction axiale, et pour incliner le rotor (101) autour de deux axes de rotation perpendiculaires l'un à l'autre et s'étendant dans le plan perpendiculaire à l'axe.

6. Système actionneur (100) selon la revendication 5, comprenant une unité de commande configurée pour commander le premier ensemble de bobines (111) et le second ensemble de bobines (121) pour mouvoir le rotor (101) relativement au stator (102) dans six degrés de liberté.

7. Système actionneur (100) selon l'une quelconque des revendications 3 à 6, dans lequel le système actionneur (100) est adapté pour alimenter les trois premiers groupes de bobines (211) et/ou les trois seconds groupes de bobines (221) en utilisant une commutation triphasée.

8. Système actionneur (100) selon l'une quelconque des revendications précédentes, dans lequel les bobines du premier ensemble et les bobines du second ensemble sont agencées en un motif alterné.

9. Système actionneur (100) selon l'une quelconque des revendications précédentes, comprenant une masse de réaction (104) et un bâti de base (105),
dans lequel le stator (102) est monté sur la masse de réaction (104),
dans lequel la masse de réaction (104) est raccordée de façon mobile au bâti de base (105).

10. Système actionneur (100) selon la revendication 9, comprenant un bâti de capteur (107) et un capteur (108),
dans lequel le bâti de capteur (107) est raccordé de façon mobile au bâti de base (105),
dans lequel le bâti de capteur (107) supporte le capteur (108),
dans lequel le capteur (108) est agencé pour fournir un signal représentatif d'une position du rotor (101).

11. Système actionneur (100) selon l'une quelconque des revendications précédentes, dans lequel chacun du stator (102) et du rotor (101) est pourvu d'un trou traversant (122) s'étendant le long de l'axe.

12. Système actionneur (100) selon l'une quelconque des revendications précédentes, comprenant un compensateur de gravité (130) destiné à supporter un poids du rotor (101), le compensateur de gravité (130) comprenant :
un aimant de rotor (131) agencé coaxialement sur le rotor (101),
un aimant intérieur (132) agencé sur le stator (102), et
un anneau d'aimant extérieur (133) agencé sur le stator (102) concentriquement et radialement vers l'extérieur par rapport à l'aimant intérieur (132),
dans lequel au moins un de l'aimant de rotor (131) et de l'aimant intérieur (132) est un anneau,
dans lequel l'aimant de rotor (131) est agencé pour faire face à l'aimant intérieur (132) et à l'anneau d'aimant extérieur (133) dans la direction axiale pour générer une force répulsive (135) dans la direction axiale.

13. Système actionneur (100) selon la revendication 12, dans lequel l'aimant intérieur (132) et l'anneau d'aimant extérieur (133) sont agencés avec une ouverture radiale (136) entre l'aimant intérieur (132) et l'anneau d'aimant extérieur (133).

14. Système actionneur (100) selon la revendication 13, dans lequel l'aimant de rotor (131) s'étend radialement en travers de l'ouverture radiale (136).

15. Système actionneur (100) selon l'une quelconque des revendications 12 à 14, dans lequel l'aimant de rotor (131) est un anneau,
dans lequel l'aimant intérieur (132) est un anneau s'étendant radialement vers l'intérieur de l'aimant de rotor (131), et dans lequel l'anneau d'aimant extérieur (133) s'étend radialement vers l'extérieur de l'aimant de rotor (131).

16. Système actionneur (100) selon l'une quelconque des revendications 12 à 15, dans lequel l'aimant de rotor (131), l'aimant intérieur (132), et l'anneau d'aimant extérieur (133) sont magnétisés axialement.

17. Système actionneur (100) selon l'une quelconque des revendications 12 à 16, dans lequel l'aimant intérieur (132) et l'aimant de rotor (131) sont tous les deux des anneaux formant un trou traversant (122) le long de l'axe.

18. Système actionneur (100) selon l'une quelconque des revendications 12 à 17, comprenant un aimant de stator (134) agencé sur le stator (102) coaxialement à l'aimant intérieur (132),
dans lequel l'aimant intérieur (132) est agencé axialement entre l'aimant de rotor (131) et l'aimant de stator (134).

19. Système actionneur (100) selon la revendication 18, dans lequel l'aimant intérieur (132) et l'aimant de stator (134) ont au moins une caractéristique parmi un même diamètre et une même épaisseur.

20. Système actionneur (100) selon la revendication 18 ou 19, dans lequel l'aimant de stator (134) est magnétisé axialement.

21. Système actionneur (100) selon l'une quelconque des revendications 18 à 20, dans lequel l'aimant intérieur (132), l'aimant de rotor (131), et l'aimant de stator (134) sont des anneaux formant un trou traversant (122) le long de l'axe.

22. Appareil tomographique destiné à générer une image d'une structure interne de l'objet (10), comprenant le système actionneur (100) selon l'une quelconque des revendications précédentes, et une source de rayonnement agencée pour irradier la structure interne de l'objet (10).
